# EUROPÄISCHE PATENTSCHRIFT

(11) **EP 0 439 697 B1**
(45) Veröffentlichungstag und Bekanntmachung des Hinweises auf die Patenterteilung: **09.03.1994**
(21) Anmeldenummer: 90121074.0
(22) Anmeldetag: 03.11.1990
(51) Int. Cl.: F16T 1/48

(54) **Kondensatableiter mit Überwachungseinrichtung**
Steam trap monitor
Dispositif de surveillance pour purgeur de vapeur

(30) Priorität: 17.01.1990 DE 4001152
(43) Veröffentlichungstag der Anmeldung: 07.08.1991
(73) Patentinhaber: GESTRA AG, D-28215 Bremen (DE)
(72) Erfinder: Föller, Werner, W-2805 Stuhr 1 (DE); Herbold, Günter, W-8200 Bremen 33 (DE)
(74) Vertreter: Eisenführ, Speiser & Partner

(56) Entgegenhaltungen:
- CH-A- 419 181
- DE-C- 619 696
- FR-A- 2 627 574
- US-A- 4 630 633

## Beschreibung

Die Erfindung betrifft einen Kondensatableiter der im Oberbegriff des Hauptanspruches spezifizierten Art.

Bei derartigen Kondensatableitern sind die überwachungseinrichtung und die Ableiteinrichtung in einem einzigen, gemeinsamen Gehäuse angeordnet. Eine bekannte Ausführung (DE-PS 619 696) weist ein Gehäuse von relativ großer Baulänge auf. Außerdem neigt die überwachungseinrichtung zu Falschsignalen. In bzw. hinter der Ableiteinrichtung erfolgt in der Regel eine deutliche Druckabsenkung des Kondensates. Dadurch verdampft ein Teil des abfließenden Kondensates, es entsteht sogenannter Entspannungsdampf. In der Meßkammer simuliert der Entspannungsdampf das Ableiten von Dampf und verursacht ein dementsprechendes Falschsignal. Obwohl der Kondensatableiter tatsächlich Kondensat ausschleust, signalisiert die überwachungseinrichtung fälschlicherweise "Dampfverlust vorhanden".

Der Erfindung liegt die Aufgabe zugrunde, einen Kondensatableiter der eingangs genannten Art zu schaffen, dessen Gehäuse in kurzer Baulänge ausgeführt werden kann und dessen überwachungseinrichtung die oben genannten Falschsignale vermeidet.

Diese Aufgabe wird durch die im Anspruch 1 aufgeführten Erfindungsmerkmale gelöst.

Dadurch, daß sich die Prüfkammer der überwachungseinrichtung seitlich neben dem Einlaßkanal befindet und die Trennwand aus einem Rohr besteht, das als Zufluß der Prüfkammer fungiert, kann die Baulänge des Gehäuses deutlich kürzer ausgeführt werden als bei der bekannten Ausführung. Das Gehäuse benötigt nur geringfügig mehr Baulänge als ein Gehäuse ohne Prüfkammer. In die Prüfkammer gelangt kein Entspannungsdampf, da sie sich in Strömungsrichtung vor der Ableiteinrichtung befindet. Die eingangs genannten Falschsignale treten folglich nicht auf.

Die Unteransprüche geben vorteilhafte Weiterbildungen der Erfindung an.

Die Ansprüche 2 und 3 haben besonders bearbeitungsgünstige Ausführungen der Prüfkammer zum Gegenstand. Sowohl die Fertigung der sich zwischen dem Eintrittskanal und der Prüfkammer erstreckenden Gehäusebohrung als auch das Montieren des Rohres ist problemlos und schnell möglich. Bei der Ausführung nach Anspruch 2 beinhaltet der Stutzen des Gehäuses die gesamte Prüfkammer. Ein Boden verschließt den Stutzen. Die Ausführung nach Anspruch 3 weist anstelle eines längeren Stutzens lediglich einen kurzen Ansatz auf. Das Gehäuse wird dadurch besonders kompakt. Sein Rohteil läßt sich deshalb z.B. günstig schmieden. Die für eine zuverlässige Signalgabe notwendige Länge der Prüfkammer wird durch eine an dem Ansatz angeordnete Haube geschaffen.

Der Anspruch 4 gibt eine besonders fertigungsgünstige Anordnung des Niveaufühlers an. Die Merkmale des Anspruches 5 haben eine für die überwachung besonders vorteilhafte Plazierung des Sensorbereiches des Niveaufühlers zum Gegenstand.

Nach Anspruch 6 ist ein konduktiver Niveaufühler mit einem gegenüber seinem Isolator größeren Kopf, der den Sensorbereich bildet, vorgesehen. Es hat sich gezeigt, daß mit einem solchen Niveaufühler eine besonders exakte Detektierung erfolgt. Dies gilt insbesondere auch in der übergangsphase zwischen ausschließlichem Kondensatzufluß und ausschließlichem Dampfzufluß, also dann, wenn mit Dampfblasen versetztes Kondensat die Prüfkammer durchströmt. Die Merkmale des Anspruches 7 wirken sich hierbei zusätzlich vorteilhaft aus.

Eine besonders eindeutige Anzeige läßt sich durch die Merkmale des Anspruches 8 selbst in der oben erwähnten übergangsphase realisieren.

Die nach Anspruch 9 vorgesehene Schräglage der Prüfkammer und des Rohres gegenüber dem Eintrittskanal ermöglicht eine noch geringere Baulänge des Gehäuses. Im übrigen ist der Kondensatableiter dann sowohl für waagerechte als auch für senkrechte Kondensatleitungen geeignet. In beiden Einbaulagen ist eine einwandfreie Funktion der überwachungseinrichtung gegeben.

Die Drosselöffnung nach Anspruch 10 läßt eine geringfügige Dampfströmung im Kondensatableiter zu, ohne daß die überwachungseinrichtung "Dampfverlust vorhanden" signalisiert. Dies ist bei Abkühlung des geschlossenen Kondensatableiters von besonderem Vorteil, wenn nämlich die in der Steuerkammer befindliche Dampfmenge kondensiert und durch nachströmenden Dampf ersetzt wird. Mit den Merkmalen des Anspruches 11 ist dieser Vorteil sowohl bei waagerechten als auch bei senkrechten Kondensatleitungen gegeben.

Der Anspruch 12 sieht vor, daß sich sowohl die Prüfkammer als auch die Steuerkammer seitlich neben dem Eintritts- bzw. dem Austrittskanal befinden. Keine von beiden ist also zwischen den inneren Enden der beiden gleichachsigen Kanäle angeordnet. Daraus resultiert eine besonders geringe Gehäuse-Baulänge.

In der Zeichnung sind zwei Ausführungsbeispiele der Erfindung dargestellt. Es zeigt
- Fig. 1: einen Kondensatableiter für waagerechte Kondensatleitungen im Schnitt und
- Fig. 2: einen Ausschnitt eines Kondensatableiters für waagerechte und senkrechte Kondensatleitungen.

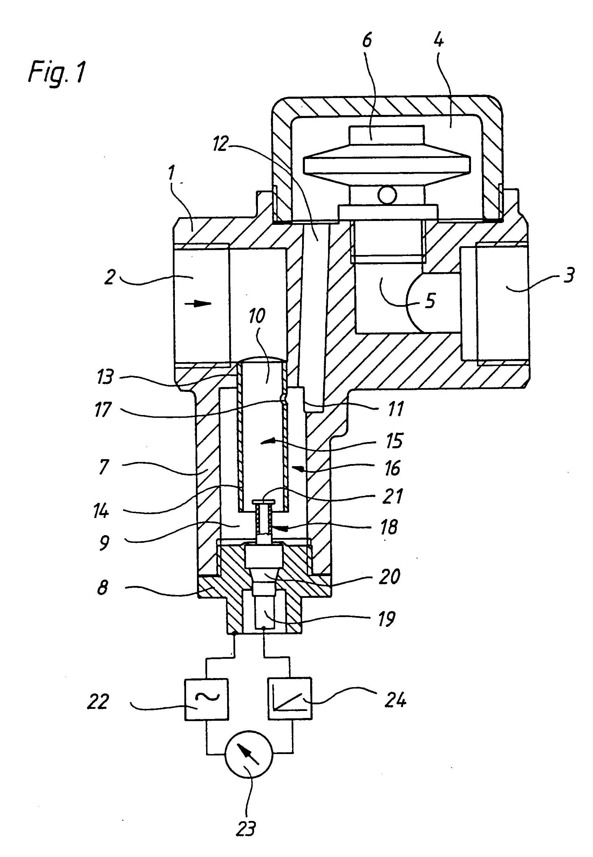

In Fig. 1 weist ein Gehäuse 1 einen Eintrittskanal 2 und einen gleichachsig dazu angeordneten Austrittskanal 3 sowie einen vordruckseitigen Steuerraum 4 auf, der seitlich neben dem Austrittskanal 3 angeordnet ist. Zwischen dem Austrittskanal 3 und dem Steuerraum 4 erstreckt sich ein niederdruckseitiger Verbindungskanal 5. In dem Steuerraum 4 ist eine Ableiteinrichtung 6 angeordnet, die Kondensat in den Verbindungskanal 5 und weiter in den Austrittskanal 3 abfließen läßt, jedoch ein Ausströmen von Dampf verhindert.

Auf seiner dem Steuerraum 4 abgewandten Seite weist das Gehäuse 1 seitlich neben dem Eintrittskanal 2 einen sich quer, und zwar rechtwinklig zum Eintrittskanal 2 erstreckenden Stutzen 7 auf, der an seinem unteren, freien Ende durch einen lösbaren Boden 8 verschlossen ist. Der Innenraum des Stutzens 7 bildet eine Prüfkammer 9, die an ihrem oberen Ende eine zentrale Zuflußöffnung 10 und gleichfalls oben eine seitliche Abflußöffnung 11 aufweist. Zwischen den inneren Enden des Eintrittskanales 2 und des Austrittskanales 3 erstreckt sich ein vordruckseitiger Verbindungskanal 12 quer durch das Gehäuse 1. Er verbindet die Abflußöffnung 11 mit dem Steuerraum 4. Die Zuflußöffnung 10 wird von einer Gehäusebohrung 13 gebildet, die vom Eintrittskanal 2 in die Prüfkammer 9 führt. In letzterer ist rechtwinklig zum Eintrittskanal 2 ein Rohr 14 angeordnet, das sich von der Gehäusebohrung 13 nach unten erstreckt und mit Abstand über dem Boden 8 endet.

Das Rohr 14 unterteilt die Prüfkammer 9 in einen der Zuflußöffnung 10 benachbarten Kammerabschnitt 15 und einen der Abflußöffnung 11 benachbarten Kammerabschnitt 16. Beide Kammerabschnitte 15, 16 sind unterhalb des Rohres 14 miteinander verbunden. Das Rohr 14 weist in Höhe der Abflußöffnung 11 eine radiale Drosselöffnung 17 auf, die beide Kammerabschnitte 15, 16 oben miteinander verbindet.

Der Boden 8 wird von einem Niveaufühler 18 durchsetzt, der in der Prüfkammer 9 emporragt, bis in das untere Ende des Rohres 14 hinein. Er weist eine zentrale, konduktive Elektrode 19 sowie einen sie ummantelnden Isolator 20 auf. In dem Kammerabschnitt 15 ragt das dortige Ende der Elektrode 19 aus dem Isolator 20 heraus. Es trägt eine dünne Scheibe 21, die den Sensorbereich bildet und im Durchmesser größer ist als der angrenzende Isolator 20.

Die Prüfkammer 9 dient mit dem Rohr 14 und dem Niveaufühler 18 als überwachungseinrichtung. Sie hat die Aufgabe, Funktionsfehler der Ableiteinrichtung 6, nämlich das Ausströmen von Dampf festzustellen. Zu diesem Zweck wird an die Elektrode 19 und den Boden 8, mit dem das Rohr 14 elektrisch leitend verbunden ist, eine elektrische Stromquelle 22, Anzeigemittel 23 und ein Integrator 24, der den Anzeigemitteln 23 vorgeschaltet ist, angeschlossen. Damit können elektrische Widerstandsänderungen festgestellt werden.

Abzuleitendes Kondensat gelangt von dem Eintrittskanal 2 durch die Zuflußöffnung 10 in den Kammerabschnitt 15 der Prüfkammer 9. Darin fließt es bis zum Ende des Rohres 14 nach unten, um dann in den Kammerabschnitt 16 zu gelangen. Von dort strömt das Kondensat durch die Abflußöffnung 11 aus der Prüfkammer 9 in den Verbindungskanal 12 und anschließend in den Steuerraum 4. Die Ableiteinrichtung 6 läßt dann das Kondensat durch den Verbindungskanal 5 und den Austrittskanal 3 aus dem Kondensatableiter abfließen. Beide Kammerabschnitte 15, 16 der Prüfkammer 9 sind währenddessen mit Kondensat gefüllt. Da Kondensat einen geringen elektrischen Widerstand aufweist, herrscht auch zwischen der Scheibe 21 des Niveaufühlers 18 und dem umgebenden Rohr 14 ein geringer elektrischer Widerstand. Dies wird durch die Anzeigemittel 23 angezeigt als Signal "Funktion einwandfrei".

Ist hingegen die Ableiteinrichtung 6 defekt, so daß Dampf aus dem Kondensatableiter ausströmt, dann wird das Kondensat nach unten aus dem Kammerabschnitt 15 verdrängt. Zwischen der Scheibe 21 und dem Rohr 14 befindet sich daraufhin Dampf. Da Dampf einen sehr viel höheren elektrischen Widerstand besitzt als Kondensat, ergibt sich an den Anzeigemitteln 23 eine andere Anzeige, nämlich "Dampfverlust vorhanden".

Durchströmt nicht ausschließlich Kondensat oder ausschließlich Dampf, sondern ein Gemisch aus Kondensat und Dampfblasen das Rohr 14, wird dies von der als Sensorbereich fungierenden, kurzen Scheibe 21 exakt detektiert. Trotz des dabei wiederholt wechselnden elektrischen Widerstandes zwischen der Scheibe 21 und dem Rohr 14 ist aufgrund des Integrators 24 eine eindeutige Anzeige an den Anzeigemitteln 23 gegeben.

Wenn bei intakter Ableiteinrichtung 6 Dampf in den Steuerraum 4 gelangt, schließt die Ableiteinrichtung 6 und verhindert ein Abströmen des Dampfes in den Austrittskanal 3.

Bei Abkühlung kondensiert die im Steuerraum 4 befindliche Dampfmenge. Infolge der daraus resultierenden Druckabsenkung in dem Steuerraum 4 fließt aus dem Eintrittskanal 2 Dampf in den Steuerraum 4 nach. Die Dampfmenge ist allerdings so gering, daß sie vollständig durch die entsprechend dimensionierte Drosselöffnung 17 strömen kann. Die Scheibe 21 ist weiterhin von Kondensat umgeben. Die Anzeigemittel 23 liefern daher nicht das falsche Signal "Dampfverlust vorhanden", sondern das richtige Signal "Funktion einwandfrei".

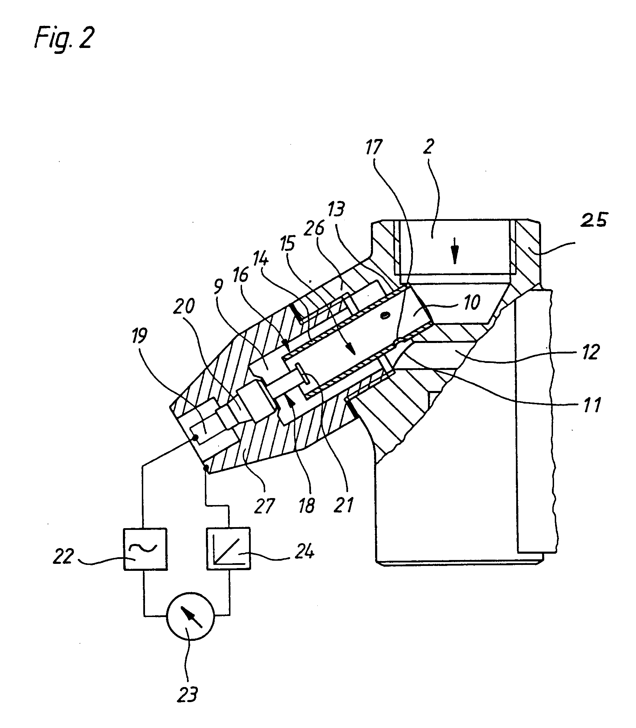

Das Gehäuse 25 in Fig. 2 unterscheidet sich von jenem in Fig. 1 dadurch, daß es seitlich neben dem Eintrittskanal 2 einen relativ kurzen Ansatz 26 aufweist, an dessen freiem Ende eine Haube 27 angeordnet ist. Der Ansatz 26 und die Haube 27 beinhalten gemeinsam die Prüfkammer 9. Die Prüfkammer 9 und das Rohr 14 sind dabei quer zum Eintrittskanal 2 angeordnet, und zwar in einem solchen Winkel, daß sich bei senkrechter Kondensatleitung die Scheibe 21 der Elektrode 19 zumindest teilweise unterhalb der Zuflußöffnung 10 und der Abflußöffnung 11 der Prüfkammer 9 befindet. Zudem ist das Rohr 14 nahe der Abflußöffnung 11 über den Umfang verteilt mit mehreren Drosselöffnungen 17 versehen.

Die in Fig. 2 gezeigte Ausführung des Kondensatableiters ist sowohl in waagerechten als auch in senkrechten Kondensatleitungen einsetzbar. In beiden Einbaulagen ist die Scheibe 21 des Niveaufühlers 18 von Kondensat umgeben, wenn der Kondensatableiter nicht von Dampf durchströmt wird. Eine korrekte Anzeige "Funktion einwandfrei" ist mithin in beiden Einbaulagen gegeben.

Aufgrund der über den Umfang verteilt angeordneten Drosselöffnungen 17 ist außerdem stets gewährleistet, daß ein durch Kondensation im Steuerraum 4 verursachter geringfügiger Dampfstrom nicht fälschlicherweise zu dem Signal "Dampfverlust vorhanden" führt. Im übrigen gilt die zu Fig. 1 gegebene Funktionsbeschreibung auch für Fig. 2.

### Bezugszeichenliste

- 1: Gehäuse
- 2: Eintrittskanal
- 3: Austrittskanal
- 4: Steuerraum
- 5: Verbindungskanal
- 6: Ableiteinrichtung
- 7: Stutzen
- 8: Boden
- 9: Prüfkammer
- 10: Zuflußöffnung
- 11: Abflußöffnung
- 12: Verbindungskanal
- 13: Gehäusebohrung
- 14: Rohr
- 15, 16: Kammerabschnitte
- 17: Drosselöffnung
- 18: Niveaufühler
- 19: Elektrode
- 20: Isolator
- 21: Scheibe
- 22: Stromquelle
- 23: Anzeigemittel
- 24: Integrator
- 25: Gehäuse
- 26: Ansatz
- 27: Haube

## Patentansprüche

1. Kondensatableiter mit
- einem Gehäuse, das mit einem Eintritts- und einem Austrittskanal, einem Steuerraum sowie einer Prüfkammer versehen ist, die in ihrem oberen Bereich eine Zufluß- und eine Abflußöffnung aufweist,
- einer im Steuerraum befindlichen Ableiteinrichtung, die den Kondensatfluß steuert,
- einer sich in der Prüfkammer nach unten erstreckenden Leitwand, die die Prüfkammer in einen der Zuflußöffnung benachbarten Kammerabschnitt und einen der Abflußöffnung benachbarten Kammerabschnitt unterteilt, wobei die beiden Kammerabschnitte im unteren Bereich der Prüfkammer miteinander verbunden sind, und
- einem Niveaufühler, dessen Sensorbereich sich im unteren Bereich der Prüfkammer befindet,
**dadurch gekennzeichnet,** daß
- die Prüfkammer (9) seitlich neben dem Eintrittskanal (2) angeordnet ist und sich im wesentlichen quer zu ihm erstreckt,
- eine die Zuflußöffnung (10) bildende Gehäusebohrung (13) von einem Eintrittskanal (2) in die Prüfkammer (9) führt,
- ein im wesentlichen quer zum Eintrittskanal (2) verlaufendes Rohr (14) vorgesehen ist, das als Leitwand von der Gehäusebohrung (13) in die Prüfkammer (9) hineinragt,
- die Abflußöffnung (11) sich außerhalb des Rohres (14) befindet,
- ein sich von der Abflußöffnung (11) zum Steuerraum (4) erstreckender Verbindungskanal (12) vorgesehen ist, und
- der Sensorbereich (21) des Niveaufühlers (18) im Bereich der Unterkante des Rohres (14) liegt.

2. Kondensatableiter nach Anspruch 1 , **dadurch gekennzeichnet,** daß das Gehäuse (1) einen seitlichen, die Prüfkammer (9) enthaltenden Stutzen (7) aufweist und ein lösbarer Boden (8) das freie Ende des Stutzens (7) verschließt.

3. Kondensatableiter nach Anspruch 1, **dadurch gekennzeichnet,** daß das Gehäuse (25) einen seitlichen Ansatz (26) aufweist, an dessen freiem Ende eine Haube (27) angeordnet ist, wobei die Haube (27) und der Ansatz (26) die Prüfkammer (9) enthalten.

4. Kondensatableiter nach einem oder mehreren der vorhergehenden Ansprüche, **dadurch gekennzeichnet,** daß der Niveaufühler (18) den Boden (8) der Prüfkammer (9) durchsetzt und in ihr emporragt.

5. Kondensatableiter nach einem oder mehreren der vorhergehenden Ansprüche, **dadurch gekennzeichnet,** daß das Rohr (14) mit Abstand über dem Boden (8) der Prüfkammer (9) endet und der Sensorbereich (21) des Niveaufühlers (18) innerhalb des Rohres (14) angeordnet ist.

6. Kondensatableiter nach einem oder mehreren der vorhergehenden Ansprüche, **dadurch gekennzeichnet,** daß der Niveaufühler (18) eine Elektrode (19) aufweist, deren prüfkammerseitiges Ende den Sensorbereich bildet und die außerhalb des Sensorbereiches von einem Isolator (20) ummantelt ist, und daß die Elektrode (19) im Sensorbereich einen Kopf (21) aufweist, der über den benachbarten Isolator (20) radial hinausragt.

7. Kondensatableiter nach Anspruch 6, **dadurch gekennzeichent,** daß der Kopf als Scheibe (21) ausgebildet ist.

8. Kondensatableiter nach einem oder mehreren der vorhergehenden Ansprüche, **gekennzeichnet durch** eine an den Niveaufühler (18) anzuschließende, elektrische Anzeigeeinrichtung, die einen Integrator (24) und damit verbundene Anzeigemittel (23) aufweist.

9. Kondensatableiter nach einem oder mehreren der vorhergehenden Ansprüche, **dadurch gekennzeichnet,** daß die Prüfkammer (9) und das Rohr (14) in einem solchen Winkel zum Einlaßkanal (2) angeordnet sind, daß sich zumindest ein Teil des Sensorbereiches (21) des Niveaufühlers (18) bei senkrechter Ausrichtung des Eintrittskanales (2) unterhalb der Abflußöffnung (11) befindet.

10. Kondensatableiter nach einem oder mehreren der vorhergehenden Ansprüche, **dadurch gekennzeichnet,** daß das Rohr (14) in seinem oberen, der Abflußöffnung (11) nahegelegenen Bereich mindestens eine radiale Drosselöffnung (17) aufweist.

11. Kondensatableiter nach Anspruch 10, **dadurch gekennzeichnet,** daß das Rohr (14) mehrere über seinen Umfang verteilt angeordnete, radiale Drosselöffnungen (17) aufweist.

12. Kondensatableiter nach einem oder mehreren der vorhergehenden Ansprüche, **dadurch gekennzeichnet,** daß
- der Eintritts- (2) und der Austrittskanal (3) des Gehäuses (1) gleichachsig angeordnet sind,
- der Steuerraum (4) auf der der Prüfkammer (9) abgewandten Seite des Gehäuses (1, 25) neben dem Austrittskanal (3) angeordnet ist und
- der Verbindungskanal (12) das Gehäuse (1, 25) zwischen den inneren Enden der Ein- und Austrittskanäle (2, 3) quer durchsetzt.

## Claims

1. Condensate remover comprising
- a housing provided with an inlet channel and an outlet channel, a control chamber and a test chamber which has in its upper part an inflow opening and an outflow opening,
- a removal device, which is situated in the control chamber and controls the flow of condensate,
- a guide wall, which extends downwards in the test chamber and divides the test chamber into a chamber part, adjacent to the inflow opening, and a chamber part, adjacent to the outflow opening, while both the chamber parts are interconnected in the lower part of the test chamber, and
- a level detector, the sensing portion of which is in the lower part of the test chamber,
characterised in that
- the testing chamber (9) is situated laterally adjacent to the inlet channel (2) and extends substantially transversely thereto,
- a housing bore (13), which forms the inflow opening (10), leads from an inlet channel (2) into the test chamber (9),
- a tube (14) is provided, which is positioned substantially transversely to the inlet channel (2) and extends as a guide wall from the housing bore (13) into the test chamber (9),
- the outflow opening (11) is situated outside the tube (14),
- a connection channel (12) is provided, which extends from the outflow opening (11) to the control chamber (4), and
- the sensing portion (21) of the level detector (18) is situated in the area of the lower edge of the tube (14).

2. Condensate remover according to claim 1,
characterised in that the housing (1) has a lateral connection (7), which contains the test chamber (9), and a removable bottom (8) closes the free end of the connection (7).

3. Condensate remover according to claim 1,
characterised in that the housing (25) has a lateral extension (26) at the free end of which is situated a hood (27), the hood (27) and the extension (26) containing the test chamber (9).

4. Condensate remover according to one or more of the preceding claims, characterised in that the level detector (18) passes through the bottom (8) of the test chamber (9) and projects into it.

5. Condensate remover according to one or more of the preceding claims, characterised in that the tube (14) ends, spaced apart, above the bottom (8) of the test chamber (9) and the sensing portion (21) of the level detector (18) is situated inside the tube (14).

6. Condensate remover according to one or more of the preceding claims, characterised in that the level detector (18) comprises an electrode (19) the end of which adjacent the test chamber forms the sensing portion and which is outside the sensing portion surrounded by an insulator (20), and that the electrode (19) has in the sensing portion a head (21) which radially projects over the adjacent insulator (20).

7. Condensate remover according to claim 6,
characterized in that the head is formed as a plate (21).

8. Condensate remover according to one or more of the preceding claims, characterised by an electric indicating device, which is connected to the level detector (18) and comprises an integrator (24) and an indicator (23) connected thereto.

9. Condensate remover according to one or more of the preceding claims, characterised in that the test chamber (9) and the tube (14) are positioned at such an angle with respect to the inlet channel (2) that, when the inlet channel (2) extends vertically, at least a part of the sensing portion (21) of the level detector (18) is situated below the outflow opening (11).

10. Condensate remover according to one or more of the preceding claims, characterised in that the tube (14) has in its upper portion adjacent the outflow opening (11) at least one radial throttling hole (17).

11. Condensate remover according to claim 10, characterized in that the tube (14) comprises several radial throttling holes (17) distributed about its circumference.

12. Condensate remover according to one or more of the preceding claims, characterised in that
- the inlet channel (2) and the outlet channel (3) of the housing (1) are coaxial,
- the control chamber (4) is situated on the side of the housing (1, 25) remote from the testing chamber (9) adjacent the outlet channel (3), and
- the connection channel (12) extends through the housing (1, 25) between the inner ends of the inlet and outlet channels (2, 3).

## Revendications

1. Purgeur de vapeur comprenant
- un boîtier, qui est pourvu d'un canal d'entrée et d'un canal de sortie, d'un espace de commande, ainsi que d'une chambre de contrôle, présentant dans son secteur supérieur une ouverture d'arrivée et une ouverture d'évacuation,
- un dispositif de purge commandant le flux de condensat, situé dans l'espace de commande,
- une paroi conductrice s'étendant vers le bas, dans la chambre de contrôle, qui divise la chambre de contrôle en une division de chambre adjacente à l'ouverture d'arrivée, et en une division de chambre adjacente à l'ouverture d'évacuation, les deux divisions de chambre étant reliées l'une à l'autre, dans le secteur inférieur de la chambre de contrôle, et
- un capteur de niveau, dont le secteur sensible se situe dans le secteur inférieur de la chambre de contrôle,
caractérisé en ce que
- la chambre de contrôle (9) est disposée latéralement à côté du canal d'entrée (2) et s'étend essentiellement perpendiculairement par rapport à celui-ci,
- un trou (13) de boîtier, constituant l'ouverture d'arrivée (10) conduit du canal d'entrée (2) dans la chambre de contrôle (9),
- une tuyauterie (14) s'étendant essentiellement perpendiculairement par rapport au canal d'entrée (2), qui s'avance en tant que paroi conductrice dans la chambre de contrôle (9) à partir du trou (13) de boîtier,
- l'ouverture d'évacuation (11) se situe en dehors de la tuyauterie (14),
- un canal de liaison (12) s'étendant depuis l'ouverture d'évacuation (11) vers l'espace de commande (4) est prévu, et
- le secteur sensible (21) du capteur de niveau (18) se situe dans le secteur de l'arête inférieure de la tuyauterie (14).

2. Purgeur de vapeur selon la revendication 1, caractérisé en ce que le boîtier (1) présente une goulotte (7) latérale, contenant la chambre de contrôle (9), et un fond amovible (8) fermant l'extrémité libre de la goulotte (7).

3. Purgeur de vapeur selon la revendication 1, caractérisé en ce que le boîtier (25) présente une pièce additionnelle latérale (26), à l'extrémité libre de laquelle est disposé un capot (27), le capot (27) et la pièce additionnelle (26) contenant la chambre de contrôle (9).

4. Purgeur de vapeur selon l'une ou plusieurs des revendications précédentes, caractérisé en ce que le capteur de niveau (18) traverse le fond (8) de la chambre de contrôle (9) et s'avance dans celui-ci.

5. Purgeur de vapeur selon l'une ou plusieurs des revendications précédentes, caractérisé en ce que la tuyauterie (14) se termine à distance au-dessus du fond (8) de la chambre de contrôle (9) et en ce que le secteur sensible (21) du capteur de niveau (18) est disposé à l'intérieur de la tuyauterie (14).

6. Purgeur de vapeur selon l'une ou plusieurs des revendications précédentes, caractérisé en ce que le capteur de niveau (18) présente une électrode (19), dont l'extrémité du côté de la chambre de contrôle, constitue le secteur sensible et qui, en dehors du secteur sensible, est entourée d'un isolant (20), et en ce que l'électrode (19) présente, dans le secteur sensible une tête (21) qui fait saillie, dans le sens radial, au-dessus de l'isolant (20) adjacent.

7. Purgeur de vapeur selon la revendication 6, caractérisé en ce que la tête est conformée comme un disque (21).

8. Purgeur de vapeur selon l'une ou plusieurs des revendications précédentes, caractérisé par un dispositif d'affichage électrique, devant être raccordé au capteur niveau (18), qui présente un intégrateur (24) et des moyens d'affichage (23) reliés à celui-ci.

9. Purgeur de vapeur selon l'une ou plusieurs des revendications précédentes, caractérisé en ce que la chambre de contrôle (9) et la tuyauterie (14) sont disposées en formant un angle tel, par rapport au canal d'entrée (2), qu'au moins une partie du secteur sensible (21) du capteur de niveau (18) se situe en-dessous de l'ouverture d'évacuation (11), lorsque le canal d'entrée (2) est orienté verticalement.

10. Purgeur de vapeur selon l'une ou plusieurs des revendications précédentes, caractérisé en ce que la tuyauterie (14) présente au moins une ouverture radiale d'étranglement (17) dans son secteur supérieur, proche de l'ouverture d'évacuation (11).

11. Purgeur de vapeur selon la revendication 10, caractérisé en ce que la tuyauterie (14) présente plusieurs ouvertures d'étranglement radiales (17), disposées en étant réparties sur son pourtour.

12. Purgeur de vapeur selon l'une ou plusieurs des revendications précédentes, caractérisé en ce que
- le canal d'entrée (2) et le canal de Ðortie (3) du boîtier (1) sont disposés dans le même axe,
- l'espace de commande (4) est disposé à côté du canal de sortie (3), sur le côté du boîtier (1, 25) opposé à la chambre de contrôle (9) et
- le canal de liaison (12) traverse le boîtier (1, 25) entre les extrémités intérieures des canaux d'entrée et de sortie (2,3).
